# EUROPEAN PATENT APPLICATION

(11) **EP 2 149 859 A1**
(43) Date of publication of application: **03.02.2010**
(21) Application number: 09165637.1
(22) Date of filing: 16.07.2009
(51) Int. Cl.: G06Q 40/00

(54) **Data flows in a computer operated currency trading system**

(30) Priority: 18.07.2008 US 175782
(71) Applicant: Option Computers Limited, London EC2M 1JJ (GB)
(72) Inventor: Smith, Frank, London, W8 6JN (GB); Kriskinans, Peter, Milton Keynes, Buckinghamshire MK5 6EU (GB)
(74) Representative: Dawson, Elizabeth Ann

(57) **Abstract**

In a computer implemented currency trading support system trades are provided to a third party (400) for settlement, and at least one of the parties (1) has a checking system (102) at which trades are checked individually. A method is described in which one or both of the parties receives data relating to individual agreed trades, identifies trades involving the same currency and the same counterparty and aggregates them into a single aggregate trade corresponding to a plurality of individual trades. The data relating to trades is then passed directly to the third party settlement system and the checking system receives data relating to any aggregate trades resulting from the aggregating step as well as data relating to the corresponding individual trades.

## Description

The present invention relates to the data flows in a computer operated currency trading system.

The foreign exchange market has seen an explosion in volumes over the past eighteen months or more driven by a number of factors, the main ones being algorithmic trading (where trading is done by computers from pre-programmed algorithms) and retail trading (small denomination trades handled by a third party aggregator). The prior introduction of multiple electronic sources of liquidity through new electronic communication networks "ECNs" and retail aggregators has, of course, enabled this growth as it could not have been achieved by traditional manual methods of trading. Particularly for algorithmic trading, speed of quote and instant execution are paramount; therefore it is desirably electronic. However, for retail foreign exchange, where amounts are considerably smaller, it is essential to keep costs down to the absolute minimum; therefore it is desirably electronic as well. How the sell-side of the market can keep both of these, seemingly mutually exclusive, aims in view at the same time is a conundrum that many are battling with right now.

Whilst most trading is undertaken with counterparties who have signed bilateral master agreements (which allows offsetting of profits and losses to be made on default events) each trade is processed individually. The master agreements enable an almost exponential growth in trading volumes as the replacement/credit risk of losses on individual trades can mostly be offset with gains on other trades. However, for processing purposes, each original trade is recorded individually and this does cause considerable pressure on processing systems. There have been a number of 'near misses' with banks' processing ability in the last twelve months, with potentially disastrous consequences to the market as a whole. The 'near misses' cause counterparties to have control issues and, for those trades that need immediate settlement, these control lapses could cause significant additional settlement risk. The knock-on effect of any settlement failures could cause the systemic risk that frightens regulators so much.

The amount of data to be handled can be reduced to some extent by "netting" or "aggregating" individual trades. Once aggregated, individual trades are otherwise known as "component trades". "Aggregating" refers to combining trades involving the same currencies in the same directions, the same counterparty and the same value date into one trade, thereby reducing the amount of data to be handled. "Netting" refers to the combining of buys and sells between two parties into a single trade or deal. Netting further reduces the amount of data. With a third party handling settlements, multilateral netting becomes possible in which each party makes a single payment in each net sold amount to the third party.

Hitherto the concept of netting, both bilateral and multilateral, has mainly been applied only to the settlement of trades, i.e. the final payment. This payment netting has greatly relieved the pressure points on market participants' settlement systems and, indeed, on the various national payment clearing systems. However, it does NOT alleviate the exponential pressures of ever increasing volumes on a party's risk and processing systems.

### General

In addition to the benefits in terms of data handling, the risk on settlement, in normal circumstances with larger counterparties, can be reduced by bi-lateral payment netting.

There is described below in one aspect a method of handling data relating to currency trades agreed between parties in a computer implemented currency trading support system in which details of trades are checked individually by one of the parties and additionally provided individually to a third party for settlement, the method comprising at least one of the parties
- receiving data relating to agreed component trades,
- identifying trades involving the same currency, counterparty and value date and aggregating them into a single aggregate trade corresponding to a plurality of component trades,
- forwarding the data relating to component trades directly to the third party settlement system and forwarding to the booking system of said at least one party data relating to any aggregate trades resulting from the aggregating step as well as data relating to the corresponding component trades.
method of handling data relating to currency trades agreed between parties in a computer implemented currency trading support system in which details of trades are provided to a third party for settlement and at least one of the parties has a booking system at which trades are recorded individually, the method comprising at least one of the parties receiving data relating to agreed individual trades, and
forwarding the data relating to trades directly to the third party settlement system prior
to passing the data to the booking system.

In another aspect the following provides a method of handling data relating to currency trades agreed between parties in a computer implemented currency trading support system in which details of trades are provided to a third party for settlement and at least one of the parties has a computerised booking system at which trades are recorded individually, the method comprising at least one of the parties
receiving data relating to agreed individual trades, and
forwarding the data relating to trades directly to the counterparty for matching prior to passing the data to the computerised booking system.

### Brief Description of the Drawings

Examples of currency exchange systems data flows will now be described by way of example only and with reference to the accompanying drawings in which:
Figure 1 is a diagram of a currency trading support system;
Figure 2 is a diagram of an improved currency trading support system implementing bilateral aggregation;
Figure 3 is a diagram of an improved currency trading support system implementing unilateral aggregation; and
Figure 4 is a more detailed diagram showing a system capable of implementing both unilateral and bilateral aggregation.

### Detailed Description

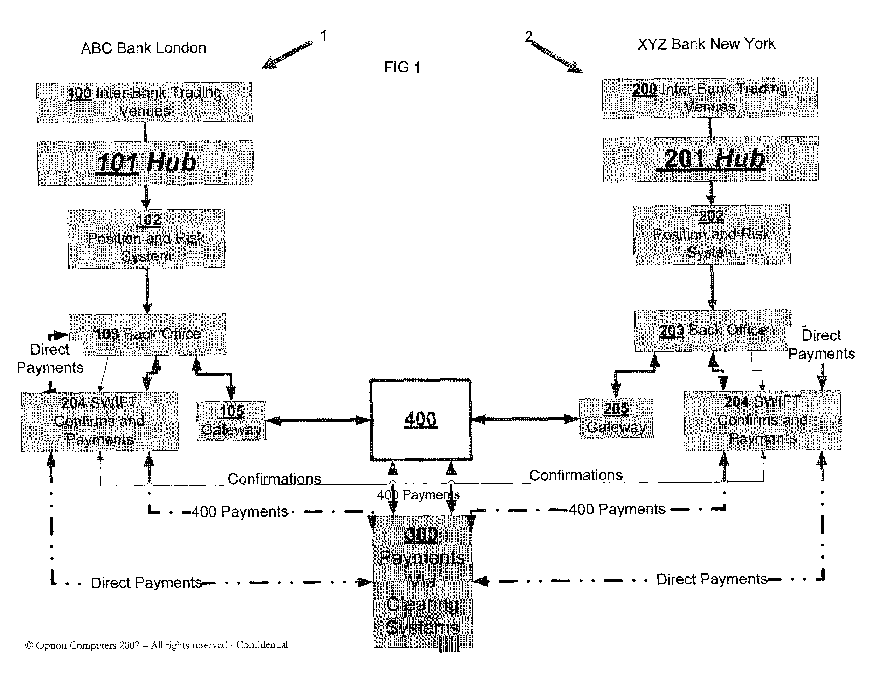

Figure 1 shows systems present in two banks 1, 2, designated ABC Bank London and XYZ Bank New York. Each bank 1, 2 has an interface 100, 200 with inter bank trading venues. Each interface receives details of currency trades that have been agreed between the two banks.

The system in one bank will now be described.

Details of agreed trades known as trade advices are passed from the interface 100 to a hub 101. The current role of the hub is to perform what is known as "straight through processing". The hub receives data from multiple sources in various formats and transforms it into a single format that can be understood by the bank's position and risk system 102. The position and risk system is used by the bank to manage its exposure in each currency or currency pair and to make decisions on trading strategies to mitigate that risk. From the position and risk system (also known as the front office) data passes to the bank back office system 103 which is the interface between the bank and the external systems that effect the exchange of currency.

The same is present in the other bank in this example. Thus XYZ bank has hub 201, position and risk system 202 and back office system 203.

The external systems include a payment clearing system 300 and a third party settlement system 400. The third party settlement system 400 is accessed by gateways 105 and 205 at the respective banks. Items 104 and 204 are gateways exchanging confirmations and payments in a secure medium. Once the confirmations are matched then the payments are sent. For legal and security reasons, the external system 400 only handles individual trades.

Direct payments are exchanged between the back offices 103, 203 and the clearing system 300.

It will be appreciated that a trade or deal has only taken place if each party to the trade is aware of it; subsequently each party confirms directly that it has agreed to the trade. Therefore data relating to a trade that has been fed into the system of ABC bank has to be matched with data relating to the same trade that has been fed into the system of XYZ bank. The matching takes place at the settlement system 400.

As noted above, the growth in trading volumes has put great pressure on the back office systems at the banks.

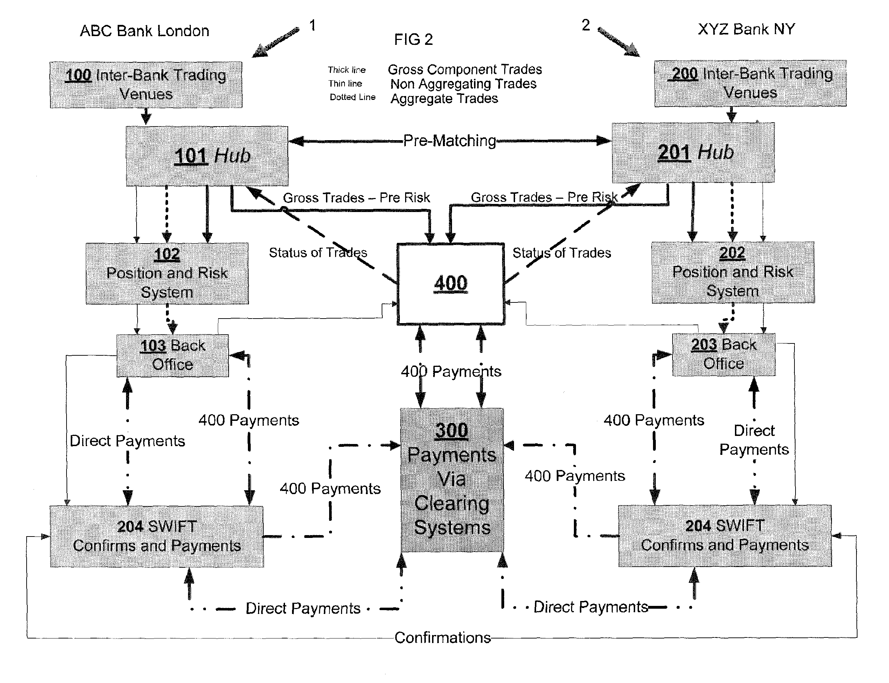

Referring now to figure 2 it will be seen that the components of this example are the same as in the system of figure 1 but they communicate in different ways. In this figure, the thick lines represent gross component trades or individual trades, the thin lines represent non-aggregating trades (trades that are not eligible to be aggregated) and the dotted lines represent aggregate trades.

Each hub 101, 201 sends details of gross component trades directly to the settlement system 400, bypassing the bank back offices 103, 203. At the same time, the hubs determine which of the gross component trades are eligible to be aggregated and aggregate them. The result of aggregating gross component trades is an aggregate trade.

Details of gross component trades are exchanged between the respective hubs so that they can be matched.

From the description so far it will be clear that the settlement system 400 receives data earlier than in the system of figure 1 and the trades are matched at an earlier stage in the process. This latter point means that the trades can be more readily traced in the event that they become lost in the system.

The hubs 101, 201 send to the position and risk systems 102, 202 details of aggregate trades as well as details of the gross component trades represented by the aggregate trades (and non-aggregating trades). Trades can be rescinded by the position and risk systems 102, 202 reporting back to the hubs 101, 201 as will be described in more detail below.

The back offices 103, 203 receive only the aggregate trades and the non aggregating trades, thereby reducing the amount of data that is processed by the back office.

In the example system described above, the hub 101 or 201 independently advises each party when the trade done data is available from the relevant ECN and it has matched the financial details in both trades. Where an exact match has not been possible, it attempts to show both parties a near match whenever possible or merely show items that remain unmatched. The hub 101 sends advices of the gross trades to the settlement system 400; these advices go in matched pairs and, therefore, there is no real urgency to these advices as long as they get to the settlement system a few hours before the settlement date. The hub, in addition, gets back status updates from the settlement system 400. By so doing it may be able to restrict aggregation to matched transactions only which will lead to better control and reconciliation processes.

Data relating to aggregate trades should be identified as such in order to ensure that the position and risk system 102 does not send instructions for them to the settlement system 400. These will have already been communicated to the settlement system 400 as gross component trades directly from the hub and therefore it is important to avoid duplication. At a pre-agreed time or event (such as an aggregate amount limit) the hub 101 finally calculates the aggregate trade amounts and give both parties the necessary trade tickets. Each party desirably ensures that when they process these tickets that they are not reported again to the settlement system 400.

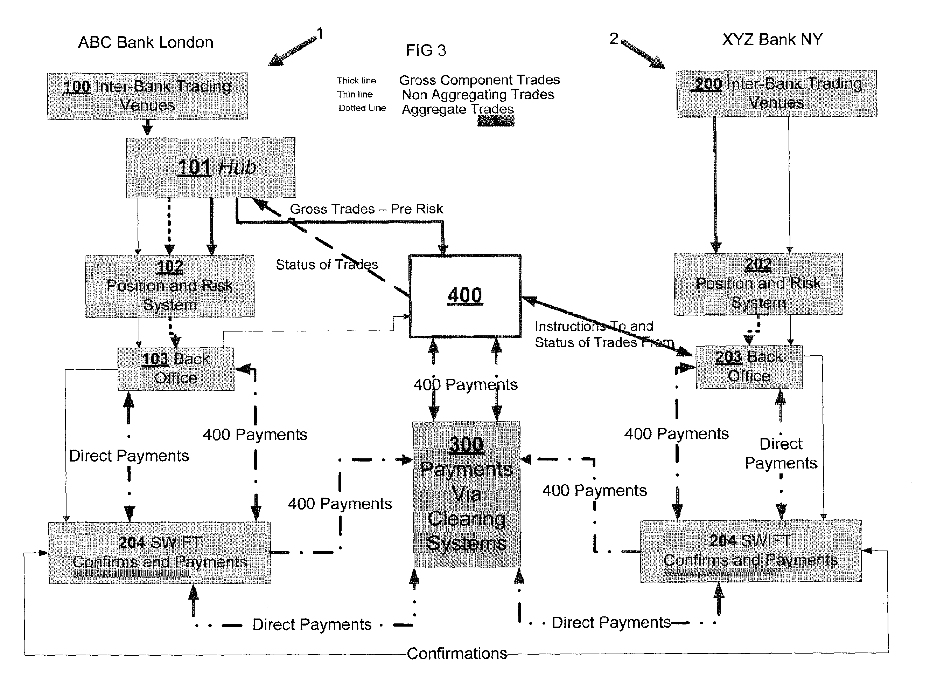

Figure 3 shows an improved currency trading support system that might be implemented as an interim measure when only one of the two parties has the advanced hub technology used in the arrangement of figure 2. Here it is still necessary for the settlement system 400 to match the details of trades but the hub 101 on one side can send details of gross component trades to the settlement system 400 prior to them being processed by the position and risk system 102. More importantly the hub 101 can aggregate trades so that the data sent to the position and risk system 102 is compressed.

The system of figure 3 is referred to as a unilateral system whereas the system of figure 2 is bilateral. Both matching and aggregation can be unilateral or bilateral. Bilateral matching is possible if the parties to the trade have hubs that are compatible with each other. If they do not then the example system of figure 3 may be implemented in which matched status information is obtained from the settlement system 400. This is termed unilateral matching. If bilateral matching is possible, bilateral aggregation is also possible. With bilateral aggregation, the two parties agree the point (in terms of time of day or value) at which a series of aggregated component trades is to be treated as a single aggregate trade.

Working in a unilateral mode means that no agreement has to be reached with another counterparty on when aggregate trades need to be calculated and, in some respects, is much easier to implement. The workflow is similar to a bilateral solution but instructions to the settlement system 400 are sent almost immediately, rather than possibly being delayed further downstream, as shown in the procedure in figure 1. As before, hub 101, in addition, gets back status updates from settlement system 400. By so doing it is able to aggregate only matched transactions which leads to better control and reconciliation processes.

Again, the eventual aggregate trades are desirably clearly identifiable so that they are not sent to settlement system 400 (as they would, in effect, be duplications). So that problems do not occur later in the process it is prudent to restrict the unilateral pre-aggregation to counterparties with whom there is an agreement not to send direct party-to-party trade confirmations.

Under both of these methods, unilateral and bilateral, there need to be strict controls over any post-aggregate amendments and reconciliations of the gross versus aggregate trades.

The systems described above can be used to perform bilateral matching prior to aggregation (figure 2) or unilateral matching prior to aggregation (figure 3). They can be combined in a single module to be described in more detail below. This has the benefit of allowing a bank to install a hub to perform unilateral matching and aggregation without another party sending matched trades to it (bilateral matching model) while also knowing that the same solution is extensible to a full bilateral matching and aggregation solution in the future.

It is also possible to configure the system to perform bilateral matching initially or to skip that and perform only unilateral matching or to skip both and simply aggregate unilaterally without any matching (latter is unlikely but possible, e.g. unilateral aggregation of client side of trades without matching). It can also be configured to perform bilateral matching with the counterparty followed by unilateral matching with the third party settlement system - again probably unlikely but possible if a bank requires a fully adaptable solution.

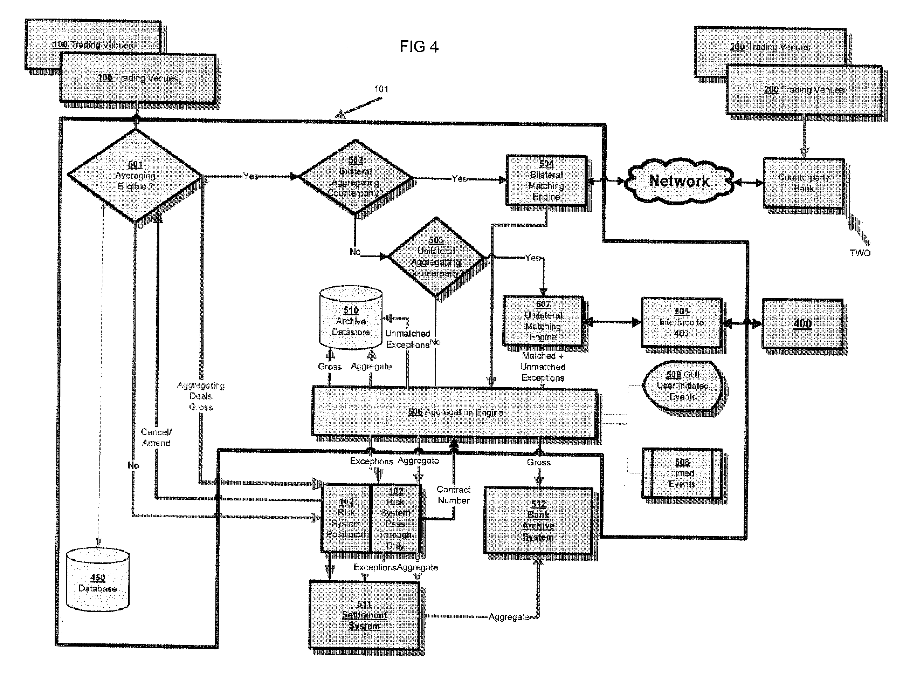

The operation of an example hub at one of the parties 1 is now described in more detail with reference to figure 4.

The example system uses a database 450 that shows those counterparties and currencies where aggregation is possible and/or desired. The database 450 could be hosted externally to facilitate access by several parties. As a trade flows from an electronic source such as one of the trading venues 100 it is checked at step 501 against that database 450 and routed accordingly. The choices for routing are:
1. No matching or aggregation (the data is passed directly to the position and risk system 102);
2. Bilateral matching (box 504) followed by unilateral or bilateral aggregation (box 506);
3. Unilateral matching (box 507) followed by unilateral or bilateral aggregation (box 506);
4. Unilateral aggregation - no matching (box 506).

As is noted above, bilateral matching is possible if the parties to the trade have hubs that are compatible with each other. If they do not then the system of figure 3 may be implemented in which matched status information is obtained from the settlement system 400.

The example hub has a module 504 in the location of each counterparty ABC, XYZ etc (or alternatively one for both which is accessed remotely). In the case of each party having a module, one of the modules is designated as a master and the other as a slave in order that they be kept in synch. As each hub 101, 201 receives trade advices from the relevant trading venue 200 it looks for a similar, but opposite, trade advice at the counterparty 2. When it finds it, it should match perfectly and both advices are marked as 'matched' accordingly. As, at the moment, only gross trades can flow to the settlement system 400, the hub 101 has an interface 505 to send these trades to the settlement system 400. (N.B. This is the first time that a front office application has been linked to a settlement system. Hitherto, trades have had to flow through to back office systems before they are available to be sent to the settlement system). If there are, for any reason, exceptions (i.e. unmatched transactions) these are shown to both parties so that remedial action can be taken. When the application running at the matching engine 504 receives a 'matched' status back from settlement system 400 it then makes the trade eligible for aggregation and calculate a running total for that counterparty/currency pair/direction/value date in an aggregation engine 506. If, by a certain time, it has not received a 'matched' status then it sends the transaction through to settlements as a gross trade.

It should be noted that, in this example, the trade data sent to and received back from the third party settlement system 400 is desirably identified as originating from the hub 101 rather than from the process source illustrated in figure 1.

In some instances, only one counterparty wants to or is able to aggregate transactions. In that case a unilateral matching engine 507 sends the gross details to the settlement system 400 via the interface 505 and waits for the settlement system to send it a 'matched' status before sending it on to aggregation at the aggregation engine 506. When the matched status message has been received, the transaction flows to the aggregation engine 506. If, by a certain time, the unilateral matching engine 507 has not received a 'matched' status then it sends the transaction through to the bank's settlement system as a gross trade. Unmatched trades are not aggregated but follow the same data flow path as non-aggregated gross trades. At present, the settlement system (400) allows transactions to be submitted only via a particular approved third party medium. The illustrated hub introduces a new connectivity module or interface 505 to the settlement system that is carrier agnostic, allowing users to choose alternative methods which may be cheaper or more efficient. Note that this replaces the gateway 105 of figure 1.

An example database 508, holds details of just when aggregation will take place. This can be at a certain time, or times, of day or it can be when amounts reach a certain barrier. These characteristics can be defined individually for each counterparty/currency pair combination. The module keeps watch on the aggregation engine 506 and on the clock and sends an appropriate signal to the aggregation engine when an event occurs.

Because exceptional events may occur at times, for whatever reasons, the hub has a facility where an authorised user can initiate an aggregation event at any time. The screens and associated graphic user interfaces "GUIs" that may be presented to the user can be customised to an institution's choice. User profiles determine whether a user has the requisite permission for such an event or whether it needs to be authorised by another user. The initiation of an event by a user via a GUI is indicated at 509.

The example aggregation engine 506 forms the heart of the improved hub. Here there is constant recalculation of aggregate amounts as each new transaction is received from the example matching engines 504 and 507. The aggregate amounts by counterparty/currency pair/direction are usually shown to users at all times. It is also possible to show these totalled across all counterparty/currency pair/directions/value date for control purposes. The engine 506 is also looking for notification of 'events' and when it receives them it immediately prepares an aggregate trade for onward transmission to the position and risk system 102 and from there to the bank internal settlement system 511. It receives relevant contract numbers back from these systems so that the original gross trades can be linked to that aggregate trade for audit purposes. After this is done these aggregate and gross trades are written to an example archive data store 510. In addition all exceptions to the aggregation process may pass through here, again for audit purposes; these may also written to the data store 510. If the client wants it, all gross transactions can be written to their own archive system 512 and linked to the subsequent aggregate trades.

All transactions that go through the hub are written to the data store 510 and every action on them is recorded, and carries a time stamp. All records are typically retained on line for 10 years.

Either party to a trade might wish to rescind a component trade before the aggregate deal has been calculated and transmitted to the position and risk system 102. This can be handled at the hub 101 and no action is required in any of the downstream systems. Similarly it is possible for a component trade to be rescinded after aggregate trades have been prepared but before the settlement date. In this situation the example hub sends a rescind message for the component trade to the settlement system 400 and a cancellation ticket to the position and risk system. In response, the status of the component trade at the settlement system 400 changes from matched to unmatched. If the settlement cycle has commenced, rescinds are only possible with the agreement of the counterparty.

The example systems of figures 2 and 3 use what might be termed "pre-netting" or "pre-aggregation" together with "pre-matching". This means that trades are, of course, still transacted individually but, instead of being sent immediately for further processing, they are retained in the front office until a pre-determined time of day or a pre-determined aggregate amount has been reached. At all times during these interim periods the aggregate exposure can be made always available for overview and reference purposes. Once a pre-determined time or event has occurred an aggregate trade is prepared and sent for further processing. By doing this the number of trades having further processing can be greatly reduced; and this can be in excess of 85%-90%.

Whilst this pre-processing is better performed bi-laterally (each party benefiting from the reduced transaction flows) the process can be done unilaterally as shown in figure 3. In such a case the non-netting counterparty is unaware of what its counterparty is doing and is kept immune from any possible ramifications by the processes carried out at the hub 101. The two areas of the foreign exchange market that may benefit more than most are those of retail trading and prime broking; in many instances these two areas are interlinked. A prime broker's clients (and these clients include a considerable number of retail aggregators), can trade, within certain limits, with a large number of executing brokers. When the trade is done these executing brokers 'give up' the trade to the prime broker; substituting the original trade with the prime broker's client to one with the prime broker itself. From the prime broker's perspective this is often referred to as a 'give in'. At this point it should be understood that it is rare for it to be absolutely necessary that an component trade remains as such throughout its life-cycle. In the vast majority of cases it is the accumulated economic effect, and net cashflows, of a number of trades that is actually required; therefore, netting down, or aggregating, a number of trades traded on one day to considerably fewer trades is exactly what is desired.

Unlike any other workflow process seen in the currency exchange market thus far the example hub 101 receives all trades for its clients from known, electronic, sources and is able to identify the counterparty to them and whether they are direct trades or given in trades from other, executing banks, for their prime brokerage clients. It is then, for preselected counterparties, to perform netting/aggregation. This can not only maintain aggregate positions by counterparty but calculates the financial impacts of all of the delayed trades for overall positioning purposes.

Working in a bilateral mode, the system can, independently, advise each party when the trade done data is available from the relevant ECN and the hub 101 has matched the financial details in both trades. Where an exact match has not been found, the example hub 101 attempts to show both parties a near match whenever possible or merely show items that remain unmatched. As required, hub 101 sends advices of the gross trades to the third party settlement system 400; these advices go in matched pairs and, therefore, there is no real urgency to these advices as long as they get to settlement system 400 a few hours before the settlement date. The example hub 101, in addition, gets back status updates from system 400. By so doing it is able to restrict aggregation to "third party matched" transactions only which leads to better control and reconciliation processes.

At a pre-agreed time or event (such as when an aggregate amount limit has been reached) the example hub 101 finally calculates the aggregate trade amounts and gives both parties the necessary trade tickets. Each party desirably ensures that when they process these tickets that they are not reported to system 400 again.

Working in a unilateral mode means that no agreement has to be reached with another counterparty on when aggregate trades need to be calculated and, in some respects, is much easier to implement. In the example, the workflow would be similar to a bilateral solution but instructions to system 400 would be sent almost immediately, rather than possibly being delayed further downstream. As before, example hub 101, in addition, gets back status updates from system 400. By so doing it is able to aggregate only "third party matched" transactions which leads to better control and reconciliation processes.

Again, the eventual aggregate trades are desirably clearly identifiable so that they are not sent to system 400 (as they would, in effect, be duplications). So that problems do not occur later in the process it is prudent to restrict the unilateral pre-aggregation to counterparties with whom there is an agreement not to send direct party-to-party trade confirmations (although, if necessary this can be overcome as well).

Under both of these methods, unilateral and bilateral, it is desirable to have strict controls over any post-aggregate amendments and reconciliations of the gross versus aggregate trades.

The systems described above may have a number of benefits including:
- Trades become 'matched' much earlier in their life cycle
- Error identification on 'unmatched' trades is, thereby, brought forward
- Costly errors downstream are greatly reduced
- Back Office productivity is increased significantly
- Instructions are advised to the settlement system far more quickly than hitherto.

## Claims

1. A method of handling data relating to currency trades agreed between parties in a computer implemented currency trading support system in which details of trades are provided to a third party system for settlement and at least one of the parties has an electronic booking system at which trades are recorded individually, the method comprising at least one of the parties
receiving data relating to agreed individual trades,
processing the data in a computer system to identify ones of the individual trades involving the same currency and the same counterparty and aggregating the identified trades into a single aggregate trade corresponding to a plurality of the individual trades,
forwarding the data relating to trades directly to the third party settlement system and;
forwarding to the booking system data relating to any aggregate trades resulting from the aggregating step as well as data relating to the corresponding individual trades.

2. A method as claimed in claim 1 in which, following recording, data relating to aggregate trades is forwarded for further processing without the data relating to the corresponding individual trades.

3. A method as claimed in claim 1 or 2 in which the aggregating takes place at a predetermined time or when a predetermined aggregate amount has been reached.

4. A method as claimed in claim 1, 2 or 3 in which data relating to individual trades is forwarded to a third party settlement system.

5. A method as claimed in any preceding claim in which aggregation of trades takes place after receiving confirmation that the data relating to the trade matches data received at the counterparty relating to the same trade.

6. A method as claimed in claim 4 in which aggregation of trades takes place after receiving confirmation that the data relating to the trade matches data received at the counterparty relating to the same trade and the confirmation is received from the third party settlement system.

7. A method as claimed in claim 5 in which data relating to individual trades is sent to the counterparty and the confirmation is received from the counterparty.

8. A computer readable medium storing program instructions executable by a processor in a computer implemented currency trading support system for causing said system to perform a method according to any preceding claim.

9. A method as claimed in any preceding claim comprising at least two of the parties receiving data relating to agreed individual trades,
processing the received individual trades at respective computer systems to identify ones of the individual trades involving a common currency and a common counterparty and aggregating the identified individual trades into a single aggregate trade,
forwarding the data relating to the individual trades directly to the third party settlement system and forwarding to the booking system of one party data relating to any aggregate trades resulting from the aggregating step as well as data relating to the corresponding individual trades.

10. A method as claimed in claim 9 in which in which the data relating to agreed individual trades received at the respective parties is exchanged and matched by the parties prior to being processed by the checking systems of each party.

11. A computer readable medium storing program instructions executable by a processor in a computer implemented currency trading support system for causing said system to perform a method according to any preceding claim.

12. A computer system for handling data relating to currency trades according to the steps of the method of any preceding claim, the system comprising:
one or more inputs for receiving the data relating to agreed individual trades,
one or more processors for processing the data to identify ones of the individual trades involving the same currency and the same counterparty and aggregate the identified trades,
and at least one output for forwarding the data relating to trades directly to the third party settlement system and forwarding to the booking system data relating to any aggregate trades resulting from the aggregating step as well as data relating to the corresponding individual trades.
